# EUROPÄISCHE PATENTSCHRIFT

(11) **EP 1 588 086 B1**
(45) Veröffentlichungstag und Bekanntmachung des Hinweises auf die Patenterteilung: **18.06.2008**
(21) Anmeldenummer: 03788840.1
(22) Anmeldetag: 03.12.2003
(51) Int. Cl.: F16L 13/14

(54) **PRESSFITTING**
PRESS FITTING SYSTEM
RACCORDS DE TUYAUX

(30) Priorität: 28.01.2003 DE 10303296
(43) Veröffentlichungstag der Anmeldung: 26.10.2005
(73) Patentinhaber: Kaimer GmbH & Co. Holding KG, 45219 Essen (DE)
(72) Erfinder: KAIMER, Bernd, 40545 Düsseldorf (DE); HERBERG, Tom, 02694 Guttau (DE)
(74) Vertreter: Kierdorf, Theodor
(86) Internationale Anmeldenummer: PCT/DE2003/003971
(87) Internationale Veröffentlichungsnummer: WO 2004/068018

(56) Entgegenhaltungen:
- DE-C- 10 118 956
- DE-C- 19 722 935
- DE-U- 29 813 935

## Beschreibung

Die Erfindung betrifft einen Pressfitting zur Herstellung einer unlösbar dichten Verbindung von glattendigen Rohren, mit wenigstens einem muffenartig ausgebildetem Querschnitt und wenigstens einer etwa endseitig des Muffenabschnitts vorgesehenen Sicke, die wenigstens ein ringförmiges gummielastisches Dichtelement aufnimmt.

Ein solcher Pressfitting ist beispielsweise aus der DE 101 18 956 C1 bekannt. Auch aus der DE 197 22 935 C1 ist ein solcher Pressfitting bekannt. Die Abdichtung der jeweils endseitig in den Fitting eingeschobenen glattendigen Rohre wird dadurch erreicht, dass durch plastische Verformung des wulstartig ausgebildeten Endes des Pressfittings der Dichtring elastisch verformt wird, um über einen bestimmten Teil des Querschnittsumfangs linienförmig und/oder flächenförmig an den ihn umgebenden Oberflächenbereichen des wulstartig ausgebildeten Endes des Fittings und des Rohres zur Anlage zu kommen. Zur Aufnahme der bei entsprechendem Innendruck auftretenden Längskräfte wird der sich an die Sicke anschließende entweder zylindrisch oder torusförmig ausgebildete Abschnitt des Fittings zusammen mit dem Rohr plastisch verformt.

Nach Herstellung einer Rohrverbindung mittels Fittingen und Rohren wird diese üblicherweise einer Druckprobe unterzogen.

Eine etwaige Leckage im Bereich der Verbindung muss bei einer solchen Druckprobe feststellbar sein. Um dies in jedem Falle zu gewährleisten, ist es bekannt, entweder den Fitting, d. h. die Sicke des Fittings oder den Dichtring, so auszubilden, dass diese im unverpressten Zustand undicht sind. Dies lässt sich entweder durch Dimensionierung des Dichtrings und/oder der Sicke oder durch entsprechende Oberflächengestaltung des Dichtrings bewerkstelligen.

In der DE 101 18 956 C1 wird beispielsweise vorgeschlagen, den Dichtring bzw. das Dichtelement mit einer Vielzahl kleiner hervorstehender Noppen zu versehen, so dass die Oberfläche des Dichtelements im unverpressten Zustand nur teilweise gegen die in den Pressfitting eingeschobene Rohrwandung anliegt. Es kommt so im unverpressten Zustand zu einer Durchlässigkeit des Dichtrings in axialer Richtung.

Eine vergleichbare Lösung wurde zuvor bereits in der DE 197 22 935 C1 vorgeschlagen. Dort ist das Dichtelement mit mehreren in Umlaufrichtung liegenden Abschnitten versehen, die einen vom Ausgangsquerschnitt abweichenden Querschnitt in Form einer sich über den Umlauf und in die Querschnittsebene erstreckenden Ausbauchung und einer dem eingeschobenen Rohr zugewandten radial in den Querschnitt des Dichtelements sich erstreckenden Ausnehmung versehen ist, wobei das Volumen der Ausbauchung im Vergleich zum Ausgangsquerschnitt mindestens so groß ist wie das zum Ausgangsquerschnitt fehlende Volumen der Ausnehmung und vor der Verpressung im Querschnitt gesehen die Ausnehmung des Dichtelements eine Durchgangsöffnung in axialer Richtung bildet.

Das Dichtelement nach dieser Lösung ist verhältnismäßig aufwendig in der Herstellung und erfordert die genaueste Einhaltung von Fertigungstoleranzen.

Bei der Lösung gemäss DE 101 18 956 besteht die Gefahr, dass die feinen Noppen auf der Außenfläche des Dichtelements beim Einschub der Rohrenden abreißen oder verletzt werden.

Aus der DE 298 13 935 ist eine unlösbare, durch Kaltverformung gebildete Pressverbindung zwischen einem Fitting und einem in eine Muffe des Fittings eingeführten Metallrohrende bekannt, wobei die Muffe eine zum Innenraum geöffnete, ringförmige Aufnahmenut für einen Dichtungsring aufweist. Dieses gummielastische Dichtungselement weist wenigstens eine Verdickung auf, die mit einer Durchbrechung durchsetzt ist. Die Durchbrechung wird erst nach Kaltverformung der Muffe und des Metallrohrendes durch ein Presswerkzeug gas- oder flüssigkeitsdicht verschlossen.

Der Durchbrechung ist am Außenumfang des Dichtungsrings eine Materialanhäufung zugeordnet, so dass bei Einschub eines glattwandigen Rohrendes in die Muffe die Gefahr besteht, dass sich die Durchbrechung so verdreht, dass diese insbesondere bei Fertigungsungenauigkeiten des Dichtrings verschlossen wird.

Der Erfindung liegt daher die Aufgabe zu Grunde, einen Pressfitting der eingangs genannten Art so zu verbessern, dass die Auflagefläche zu dem Rohrende und der Sicke so gestaltet ist, dass die Lage und Funktion der Leckagestellen durch das Einschieben des glattwandigen Rohrendes nicht beeinträchtigt werden.

Hierzu werden erfindungsgemäß mehrere Lösungen vorgeschlagen.

Die der Erfindung zugrunde liegende Aufgabe wird zunächst dadurch gelöst, dass die Oberfläche des Dichtelements wenigstens bereichsweise mit rinnenförmig ausgebildeten Kanälen durchzogen ist, die im unverpressten Zustand des Dichtelements labyrinthartig miteinander kommunizieren, wobei die durch die Kanäle unterbrochenen Dichtflächen im verpressten Zustand die Kanäle verschließend aneinandergepresst sind.

Als besonders vorteilhaft hat sich diese Lösung erwiesen, wenn die Dichtflächen des Dichtelements den größten Teil der Oberfläche des Dichtelements bilden.

Nach einer weiteren Lösung der eingangs genannten Aufgabe ist ein Pressfitting mit Oberbegriff von Anspruch 1 vorgesehen, der sich dadurch auszeichnet, dass das Dichtelement über seinen gesamten Umlauf einen gleichen, nicht rotationssymmetrischen Querschnitt aufweist, der über den Umlauf des Dichtelements jeweils in Bezug auf eine Symmetrieachse durch den geometrischen Schwerpunkt eine andere Winkellage einnimmt. Der Querschnitt des Dichtelements ist also über den gesamten Umlauf desselben in sich verdreht, so dass im unverpressten Zustand Lücken zwischen Fittingwulst und Dichtelement sowohl als auch zwischen eingeschobenem Rohr und Dichtelement entstehen. Wird der Fitting verpresst, findet ein Volumenausgleich statt. Der Dichtring dichtet dabei sowohl gegen den Fittingwulst bzw. gegen die Sicke als auch gegen das eingeschobene Rohr ab. Diese Lösung ist sowohl fertigungstechnisch als auch von der Wirkungsweise des Dichtelements besonders elegant.

Es besteht verhältnismäßig viel Freiheit bei der Wahl des Querschnitts des Dichtelements, was ebenfalls fertigungstechnisch von Vorteil ist.

Das Dichtelement kann beispielsweise einen vieleckigen Querschnitt aufweisen, der über den Umlauf des Dichtelements in sich verdreht ist. Alternativ hierzu kann das Dichtelement einen elliptischen Querschnitt aufweisen, der selbstverständlich ebenfalls in Umlaufrichtung desselben in sich verdreht ist.

Der Begriff "verdreht" im Sinne der Erfindung ist nicht so zu verstehen, dass die Dichtschnur in sich tordiert ist, sondern vielmehr so, dass das Dichtelement im spannungsfreien und unverpressten Zustand die zuvor beschriebene Geometrie aufweist.

Die Erfindung wird nachstehend anhand mehrerer in den Zeichnungen dargestellter Ausführungsbeispiele erläutert werden.

Es zeigen :
- Fig.1: einen schematischen Querschnitt durch eine Rohrverbindung gemäss der Erfindung,
- Fig. 2: eine schematische Ansicht durch eine Rohrverbindung gemäss der Erfindung bei einer alternativen Ausgestaltung des Pressfittings,
- Fig. 3: eine Ansicht einer ersten Ausführungsform des Dichtelements gemäss der Erfindung in Perspektive,
- Fig. 4: eine perspektivische Draufsicht auf ein Dichtelement nach einer zweiten Ausführungsform der Erfindung,
- Fig. 5: eine Seitenansicht des in Figur 4 dargestellten Dichtelements in Perspektive,
- Fig. 6: eine perspektivische Draufsicht auf ein Dichtelement nach eine dritten Ausführungsform, **die nicht Teil der Erfindung ist,**
- Fig. 7: eine Seitenansicht des in Figur 6 dargestellten Dichtelements,
- Fig. 8: eine schematische Darstellung des Dichtelements gemäss der Erfindung nach einer vierten Ausführungsform, teilweise im Schnitt,
- Fig. 9: eine schematische Draufsicht auf das Dichtelement gemäß einer fünften Ausführungsform der Erfindung, teilweise im Schnitt und
- Fig. 10: eine Seitenansicht des in Figur 9 dargestellten Dichtelements, teilweise im Schnitt.

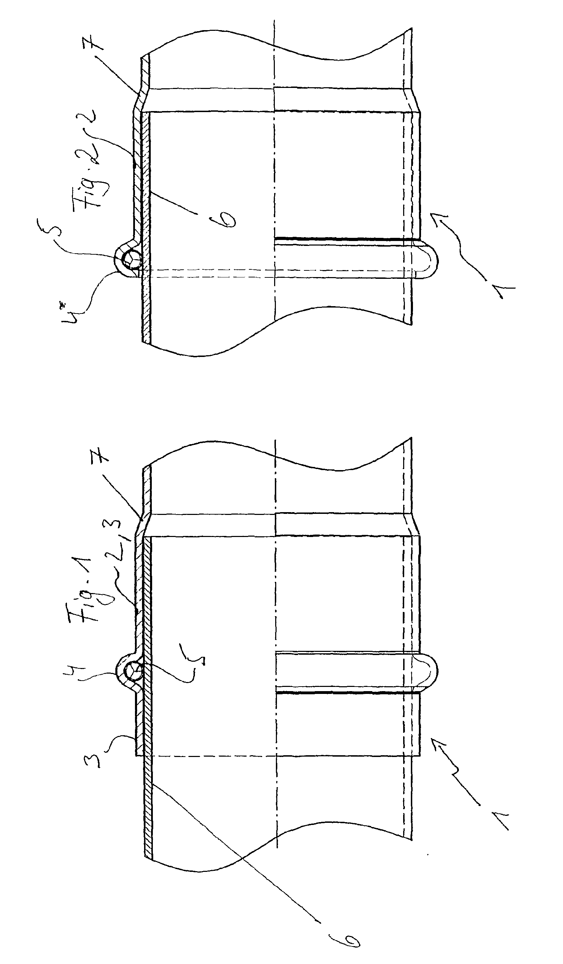

Die Figuren 1 und 2 zeigen jeweils einen Längsschnitt durch eine Rohrverbindung 1 mit einem Pressfitting 2 gemäss der Erfindung. Der Pressfitting 2 besteht aus einem muffenartig ausgebildeten Bereich 3, der entweder zylindrisch oder torusförmig ist, je nach dem, ob es sich um ein Bogenstück oder ein in sich gradlinig erstreckenden Fitting handelt. Jeweils endseitig des muffenartig ausgebildeten Bereichs weist der Pressfitting 2 eine umlaufende Sicke 4 auf, die wiederum ein ringförmiges Dichtelement 5 aus gummielastischem Material aufnimmt. Der Pressfitting 2 nimmt ein glattwandiges Rohrende 6 auf, welches in diesem bis zu einem Anschlag 7 eingeschoben wird. Der Anschlag 7 kann entweder durch eine Querschnittsverjüngung des muffenartig ausgebildeten Bereichs 3 oder durch einzelne Einprägungen, die in den Innenquerschnitt desselben hervortreten, gebildet werden. Im Falle der in den Figuren 1 und 2 dargestellten Rohrverbindungen 1 wird der Anschlag 7 jeweils durch eine Querschnittsverjüngung des muffenartig ausgebildeten Bereichs 3 gebildet. Die Pressfittinge 2 gemäss Darstellung in Figur 1 und Figur 2 unterscheiden sich dadurch, dass im Falle des in Figur 1 dargestellten Ausführungsbeispiels die Sicke 4 nicht den stirnseitigen Abschluss des Pressfittings 2 bildet, sondern dass sich beidseitig der Sicke 4 jeweils ein Abschnitt des muffenartig ausgebildeten Bereichs 3 erstreckt. Bei dem in Figur 2 dargestellten Ausführungsbeispiel hingegen bildet die Sicke 4 den stirnseitigen Abschluss des Pressfittings 2.

Die Figuren 1 und 2 zeigen die Rohrverbindung 2 im unverpressten Zustand. Üblicherweise werden der wulstartig ausgebildete Bereich des Pressfittings 2, d. h. die Sicke 4 und der unmittelbar sich daran anschließende Bereich des Fittingkörpers mittels eines Pressbacken aufweisenden Presswerkzeuges im Bereich der plastischen Verformung verpresst. Dabei wird das Dichtelement 5 radial komprimiert, so dass dieses linienförmig an der Außenwandung des Rohrs 6 anliegt. Das Dichtelement 5 kann auch bereits im unverpressten Zustand des Pressfittings 2 gegen die Außenwandung des Rohres 6 anliegen.

Wie eingangs bereits beschrieben, kann es bei Druckprüfung der Rohrverbindung vorkommen, dass auch bei unverpresster Rohrverbindung keine Leckage auftritt, was nicht wünschenswert ist.

Die Leckage wird dazu genutzt, gegebenenfalls un-verpresste Rohrverbindungen zu detektieren. Es kann nämlich vorkommen, dass eine Leckage erst bei Druckstoßbelastung der Leitung auftritt. Diese Druckstoßbelastung ist beispielsweise bei der Verwendung von Einhandmischhebelarmaturen verhältnismäßig hoch.

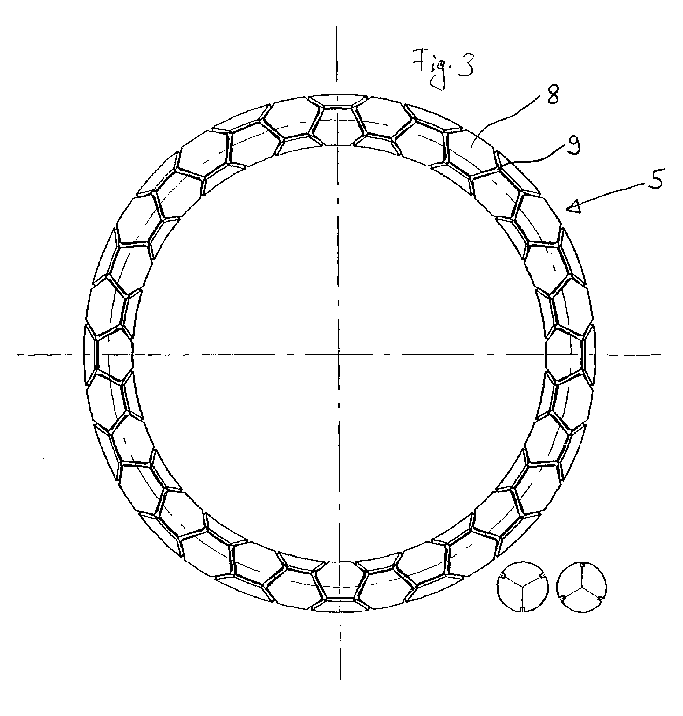

Hierzu ist erfindungsgemäß Dichtelement 5 so beschaffen, dass im unverpressten Zustand der Rohrverbindung 1 ein axialer Durchgang zwischen dem Dichtelement 5 und der Außenwandung des Rohrs 6 geschaffen wird. Die Ausbildung des Dichtelements 5 ist in den Figuren 3 bis 10 veranschaulicht. Figur 3 zeigt eine erste Variante des Dichtelements, bei welchem die Dichtfläche 8 des Dichtelements 5 ähnlich einem Reifenprofil mit labyrinthartig ausgebildeten und miteinander kommunizierenden Kanälen 9 durchsetzt ist. Die Kanäle 9 bilden axiale Durchgänge zwischen der Außenwandung des eingeschobenen Rohres 6 und dem Dichtelement 5 im unverpressten Zustand der Rohrverbindung1.

Sobald die Rohrverbindung 1 verpresst wird, wird das Dichtelement 5 radial so komprimiert, dass die Kanäle 9 zusammengedrückt werden und eine zusammenhängende Dichtfläche 8 entsteht.

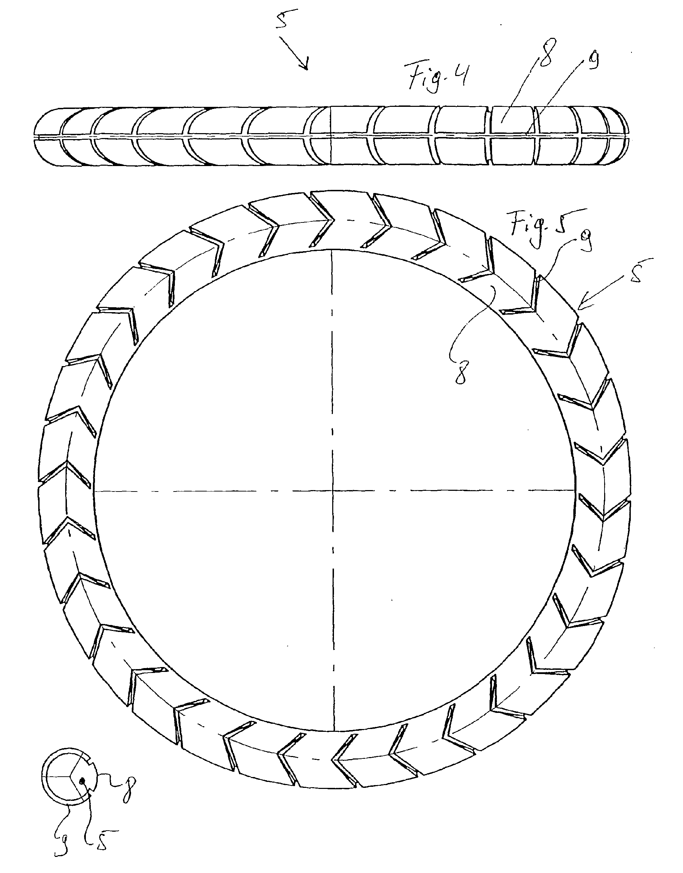

Die Figuren 4 und 5 zeigen eine zweite Variante des Dichtelements 5, bei dem die Kanäle 9 die Dichtfläche 8 nur über einen Teil des Umfangs des Dichtelements 5 durchziehen. Hier sind die Kanäle 9 beispielsweise an der in Einbaulage an der Außenwandung des Rohrs 6 anliegenden Seite des Dichtelements, d. h. radial einwärts, ausgelassen bzw. unterbrochen.

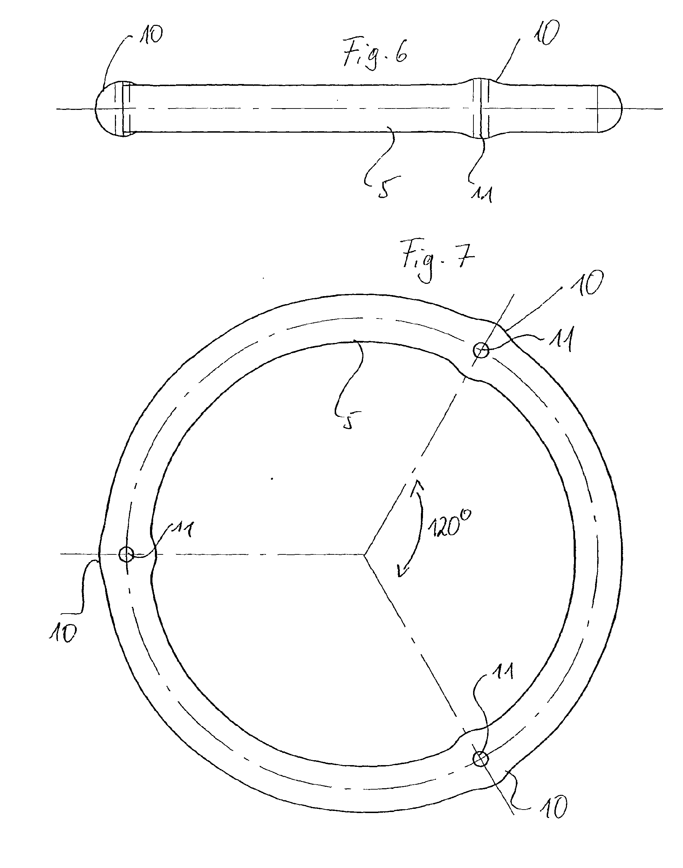

**Das in den** **Figuren 6 und 7** **dargestellte Dichtelement ist nicht Teil der Erfindung.** Das Dichtelement 5 ist als Dichtschnur mit rundem Querschnitt ausgebildet, wobei im Winkelabstand von 120° über den Umlauf des Dichtelements 5 torusförmige Verdickungen 10 vorgesehen sind, die jeweils axial mit Bohrungen 11 durchsetzt sind. Axial heißt in diesem Zusammenhang in Richtung der Längserstreckung des Pressfittings 2. D. h., dass in dieser Richtung axiale Durchgänge geschaffen werden, die aufgrund der Volumenanhäufung im Bereich der Verdickungen 10 im verpressten Zustand verschlossen werden.

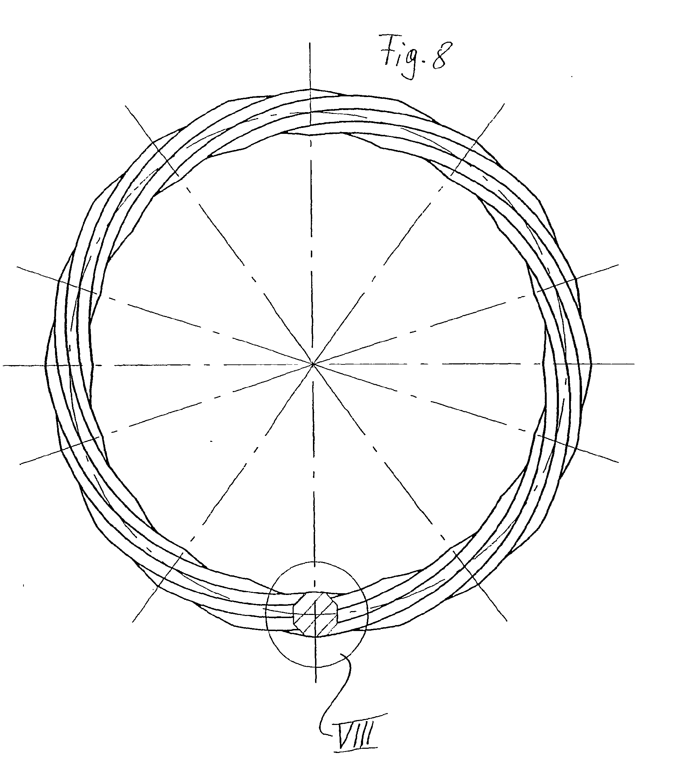

Eine weitere Variante des erfindungsgemäßen Dichtelements 5 ist in den Figuren 8,9 und 10 dargestellt. Das Dichtelement 5 hat über seinen gesamten Umlauf einen gleichbleibenden Querschnitt, im Falle der Figur 8 einen achteckigen Querschnitt, wie aus der mit VIII bezeichneten Querschnittsansicht ersichtlich ist. Dieser in Bezug auch auf die sich in Umlaufrichtung des Dichtelements 5 erstreckende Mittelachse desselben nicht rotationssymmetrische Querschnitt ist über den Umlauf des Dichtelements 5 in sich verdreht, so dass im unverpressten Zustand Lücken zwischen der Sicke 4 und dem Dichtelement 5 als auch Lücken zwischen dem Dichtelement 5 und der Außenfläche des Rohres 6 entstehen. Wie vorstehend bereits erwähnt, ist das Dichtelement 5 nicht unter Spannung in sich tordiert, sondern ist im entspannten und unverpressten Zustand, wie in Figur 5 dargestellt, formstabil.

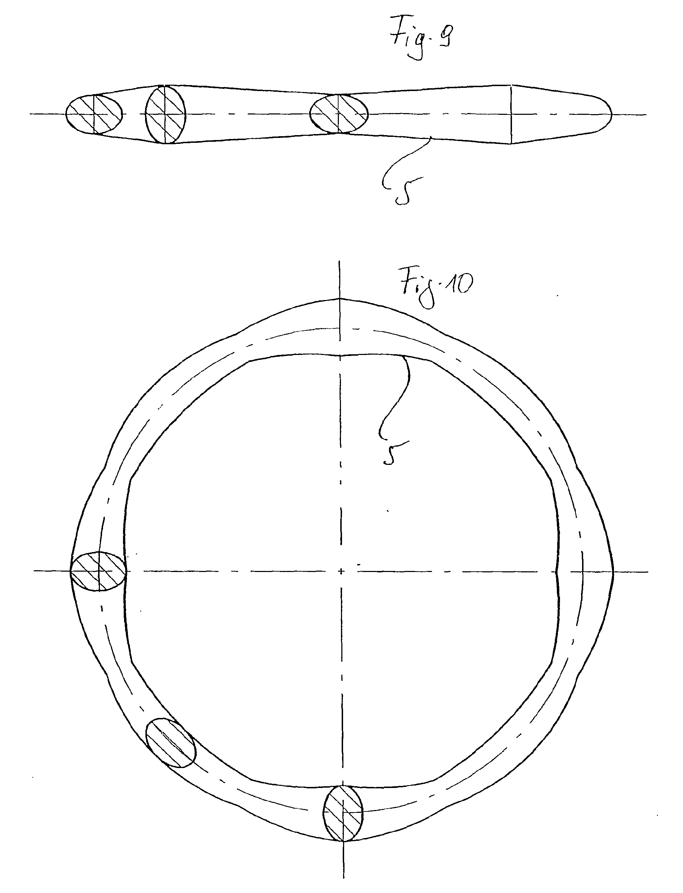

Eine Alternative des zuvor beschriebenen Lösungsprinzips ist in den Figuren 9 und 10 dargestellt. Auch hier hat das Dichtelement 5 über seinen gesamten Umlauf einen gleichbleibenden Querschnitt, der bereichsweise in Bezug auf eine Symmetrieachse durch den geometrischen Schwerpunkt bzw. in Bezug auf die umlaufende Achse des Dichtelements 5 eine andere Winkellage einnimmt. Bei dem dargestellten Ausführungsbeispiel ist der Querschnitt elliptisch und das Dichtelement 5 ist über seinen Umlauf in acht Bogensegmente unterteilt, wobei in jedem der Bogensegmente der Querschnitt des Dichtelements 5 jeweils um 90° verdreht angeordnet ist.

### Bezugszeichenliste

- 1: Rohrverbindung
- 2: Pressfitting
- 3: muffenartig ausgebildeter Bereich
- 4: Sicke
- 5: Dichtelement
- 6: Rohr
- 7: Anschlag
- 8: Dichtfläche
- 9: Kanäle
- 10: Verdickungen
- 11: Bohrungen
- 12: Bogensegment

## Patentansprüche

1. Pressfitting (2) zur Herstellung einer unlösbar dichten Verbindung von glattendigen Rohren, mit wenigstens einem muffenartig ausgebildeten Abschnitt (3) und mit wenigstens einer etwa endseitig des Muffenabschnitts vorgesehenen Sicke (4), die wenigstens ein ringförmiges, gummielastisches Dichtelement (5) aufnimmt, **dadurch gekennzeichnet, dass** die Oberfläche des Dichtelements (5) wenigstens bereichsweise mit rinnenförmig ausgebildeten Kanälen (9) durchzogen ist, die im unverpressten Zustand des Dichtelements (5) labyrinthartig miteinander kommunizieren, wobei die durch die Kanäle (9) unterbrochenen Dichtflächen (8) im verpressten Zustand die Kanäle (9) verschließend aneinander gepresst sind.

2. Pressfitting nach Anspruch 1, **dadurch gekennzeichnet, dass** die Dichtflächen (8) des Dichtelements (5) den größten Teil der Oberfläche des Dichtelements (5) bilden.

3. Pressfitting (2) zur Herstellung einer unlösbar dichten Verbindung von glattendigen Rohren, mit wenigstens einem muffenartig ausgebildeten Abschnitt (3) und mit wenigstens einer etwa endseitig des Muffenabschnitts vorgesehenen Sicke (4), die wenigstens ein ringförmiges, gummielastisches Dichtelement (5) aufnimmt, **dadurch gekennzeichnet, dass** das Dichtelement (5) über seinen Umlauf einen gleichen, nicht rotationssymetrischen Querschnitt aufweist, der über den Umlauf des Dichtelements(5) jeweils in Bezug auf eine Symetrieachse durch den geometrischen Schwerpunkt des Querschnitts eine andere Winkellage einnimmt.

4. Pressfitting nach Anspruch 3, **dadurch gekennzeichnet, dass** das Dichtelement (5) einen vieleckigen Querschnitt aufweist, der über den Umlauf des Dichtelements (5) in sich verdreht ist.

5. Pressfitting nach Anspruch 3, **dadurch gekennzeichnet, dass** das Dichtelement (5) einen elliptischen Querschnitt aufweist.

## Claims

1. A press fitting (2) for producing a non-releasably sealed connection between smooth-ended pipes with at least one portion (3) of a socket-like configuration and at least one bead (4) which is provided approximately at the end of the socket portion and which accommodates at least one annular, rubber-elastic sealing element (5), **characterised in that** channels (9) of a groove-shaped configuration extend at least in region-wise manner through the surface of the sealing element (5), which channels (9) communicate with each other labyrinth-like in the unpressed condition of the sealing element (5), wherein the sealing surfaces (8) which are interrupted by the channels (9) are pressed against each other in the pressed condition to close the channels (9).

2. A press fitting according to claim 1 **characterised in that** the sealing surfaces (8) of the sealing element (5) form the largest part of the surface of the sealing element (5).

3. A press fitting (2) for producing a non-releasably sealed connection between smooth-ended pipes with at least one portion (3) of a socket-like configuration and at least one bead (4) which is provided approximately at the end of the socket portion and which accommodates at least one annular, rubber-elastic sealing element (5), **characterised in that** the sealing element (5), over its periphery, is of an identical cross-section which is not rotationally symmetrical and which over the periphery of the sealing element (5) respectively assumes a different angular position in relation to an axis of symmetry through the geometrical centre of gravity of the cross-section.

4. A press fitting according to claim 3 **characterised in that** the sealing element (5) is of a polygonal cross-section which is turned in itself over the periphery of the sealing element (5).

5. A press fitting according to claim 3 **characterised in that** the sealing element (5) is of an elliptical cross-section.

## Revendications

1. Raccords de tuyaux (2) pour l'établissement d'un raccord permanent et étanche de tuyaux à extrémité lisse, comportant au moins un tronçon (3) formé d'un manchon et comportant au moins une moulure (4) prévue à peu près à l'extrémité du tronçon du manchon, qui loge au moins un joint annulaire (5), avec l'élasticité du caoutchouc, **caractérisés en ce que** la superficie du joint (5) est traversée au moins partiellement par des canaux (9) en forme de rigoles, qui communiquent entre eux par labyrinthe lorsque le joint (5) n'est pas comprimé, à l'état comprimé les surfaces d'étanchéité (8), entrecoupées par les canaux (9), étant pressées les unes contre les autres, ferment les canaux (9).

2. Raccords de tuyaux selon la revendication 1, **caractérisés en ce que** les surfaces d'étanchéité (8) du joint (5) forment la majeure partie de la superficie du joint (5).

3. Raccords de tuyaux (2) pour l'établissement d'un raccord permanent et étanche de tuyaux à extrémité lisse, comportant au moins un tronçon (3) formé d'un manchon et comportant au moins une moulure (4) prévue à peu près à l'extrémité du tronçon du manchon, qui loge au moins un joint annulaire (5), avec l'élasticité du caoutchouc, **caractérisés en ce que** le joint (5) présente, sur sa circonférence, une coupe transversale identique sans symétrie de révolution, qui prend une autre position angulaire sur la circonférence du joint (5) par rapport à un axe de symétrie, à travers le centre de gravité géométrique de la coupe transversale.

4. Raccords de tuyaux selon la revendication 3, **caractérisés en ce que** le joint (5) présente une coupe transversale polygonale qui est vrillée sur elle-même sur la circonférence du joint (5).

5. Raccords de tuyaux selon la revendication 3, **caractérisés en ce que** le joint (5) présente une coupe transversale en forme d'ellipse.
